# EUROPEAN PATENT APPLICATION

(11) **EP 1 449 427 A1**
(43) Date of publication of application: **25.08.2004**
(21) Application number: 02802030.3
(22) Date of filing: 18.10.2002
(51) Int. Cl.: A01G 7/00, A01G 1/00, A01N 63/00, A01N 63/02

(54) **ROOTED CUTTING AND METHOD OF INOCULATING ROOTED CUTTING WITH MICROBIAL STRAIN**

(30) Priority: 22.10.2001 JP 2001322922
(71) Applicant: Taki Chemical Co., Ltd., Kakogawa-shi, Hyogo-ken 675-0124 (JP)
(72) Inventor: MAEKAWA, Yoshio, Miki-shi, Hyogo 673-0553 (JP); SAKAMOTO, Ihori, Kobe-shi, Hyogo 651-2225 (JP); JINNOH, Kiyoshi, Akashi-shi, Hyogo 673-0891 (JP)
(74) Representative: Morf, Jan Stefan, Dr. Dipl.-Chem.
(86) International application number: PCT/JP2002/010864
(87) International publication number: WO 2003/034807

(57) **Abstract**

An object of the present invention is that in a cuttage such as vegetables, flowering plants, fruit trees, etc. in a field of agriculture, infection of the cuttage by polluting microorganisms in environment is prevented and improvement in the yield of the cuttage is aimed. The present invention relates to a cutting seedling where a strain selected from *Pseudomonas fluorescens* FPT-9601 strain (Accession Number PERM BP-5478), FPH-9601 strain (Accession Number FERM BP-5479) , TSB-25 strain (Accession Number FERM BP-8193), FPT-Y1 strain (Accession Number FERM BP-8191), FPT-B1 strain (Accession Number FERM BP-8190) and *Xanthomonas maltophyllia* XM-D strain (Accession Number FERM BP-8192) is inoculated, and solves the object as mentioned above by inoculating the strain to the cutting seedling by using a solution or a solid containing at least one member of the strain.

## Description

### Background of the Invention

The present invention relates to a cutting seedling such as vegetables, flowering plants, fruit trees, etc. in a field of agriculture to which strain is inoculated and also to a method for inoculation of strain to a cutting seedling. More particularly, an object of the present invention is that the strain selected from microorganism of genus *Pseudomonas* or genus *Xanthomonas* of the present invention is inoculated to the surface exposed after cutting of the plant and the plant to which the strain is inoculated is utilized as a cuttage whereby infection of the cuttage by polluting microorganisms in environment is prevented and improvement in the yield of the cuttage is aimed.

### Prior Art

In fruits, vegetables and flowering plants, there has been carried out a seedling preparation by means of cuttage such as cuttage of lateral buds, cuttage or cottage-grafting of young seedling after cutting the root as a seedling where efficiency of growth of seedling (including enhancement of grafting rate) or resistance to disease is improved. Today, division of agricul ture progresses and many farmers do not prepare seedlings from sewing but purchase the commercially available seedlings and cultivate them. For example, in the case of commercially available seedlings of family *Cucurbitaceae*, a cottage-grafting after cutting the root is a mainstream in their grafted seedling. On the other hand, in scientific studies, there is introduced a hypocotyl cutting, inoculating and cuttage method of actinomycetes of genus *Streptomyces*, bacteria of genus *Bacillus*, fungi of genus *Trichoderma* and genus *Aspergillus* as a method for symbiosis in tissues of antagonistic microorganisms for the purpose of suppression of blight by soil as a result of a study by a group of Kijima, et al. in "New Stages of Tissue Culture of Plants" (by Toyoki Kozai; published by Nobunkyo, 1998).

As mentioned above, in the actual agriculture, there have been carried out cuttage of terminal buds of parent plant of floweringplants, fruitsandvegetables, cuttage of lateral buds, cuttage of young seedling of fruits and vegetables, cuttage of grafting after cutting the root (grafting for the purpose of improvement in raising rate of grafted seedling for planting by adjustment of a balance between the scion and the stock) and the like. In general, a work environment is greatly different between in actual agriculture and in scientific study. Therefore, there are problems in actual agriculture that, in various cuttage methods, softening of cut area and tissue (rooting site) by infection to cut area of cut buds (terminal bud, lateral bud, etc.) with bacteria, etc. take place or poor rooting as a result of physical stress by cutting work, cuttage at high temperature, etc. happens. Especially in the case of cuttage work at the actual agriculture at a high-temperature season, softened seedlings at the cut area and tissues (rooting site) are generated as many as 20 to 30% of all young plants grown up from a cuttage but, at present, no sufficient countermeasure has been carried out yet.

In a series of works in cuttage, even when the plant to be tested (collected stock, terminal bud, lateral bud, young seedling wherefrom the root is cut off, young seedling wherefrom hypocotyl is cut off, etc.) is sound, blight is generated under the environment of the agricultural work due to aerial infection to the cut surface and tissue, artificial infection, infection to cuttage bed (such as soil for cuttage bed, rock wool cube, hydroponic liquid and water), etc. resulting in a decrease in raising rate of cutting seedling for planting. It has been difficult to conduct a countermeasure against such infections as a whole. However, it is essential in the preparation of seedlings by means of cuttage to prevent the blight caused by polluting microorganisms as such.

### Summary of the Invention

The present inventors have repeatedly carried out various investigations for a method of solving such problems in young plants grown upon from a cuttage as such and, as a result, they have achieved the present invention which will be mentioned in detail as hereunder.

Thus, the present invention relates to a cutting seedling where a strain selected from *Pseudomonas fluorescens* FPT-9601 strain (Accession Number FERM BP-5478), FPH-9601 strain (Accession Number FERM BP-5479), TSB-25 strain (Accession Number FERM BP-8193), FPT-Y1 strain (Accession Number PERM BP-8191), FPT-B1 strain (Accession Number FERM BP-8190) and *Xanthomonas maltophyllia* XM-D strain (Accession Number FERM BP-8192) is inoculated.

The present invention further relates to a method for inoculation of a strain to a cutting seedling, characterized in that, a strain is inoculated to a cutting seedling using a solution or a solid containing at least one member of a strain selected from *Pseudomonas fluorescence* FPT-9601 strain (Accession Number FERM BP-5478), FPH-9601 strain (Accession Number PERM BP-5479), TSB-25 strain (Accession Number FERM BP-8193), FPT-Y1 strain (Accession Number FERM BP-8191) , FPT-B1 strain (Accession Number FERM BP-8190) and *Xanthomonas maltophyllia* XM-D strain (Accession Number FERM BP-8192).

The present invention still further relates to a method for inoculation of a strain to a cutting seedling, characterized in that, a strain is inoculated to a cutting seedling using a solution containing 10² to 10⁸ CFU/ml of the strain or a solid containing 10⁴ to 10⁷ CFU/g of the strain.

### Detailed Description of the Invention

The bacteria used in the present invention were those which have been deposited at the International Patent Organism Depositary, National Institute of Advanced Industrial Science and Technology {AIST Tsukuba Central 6, 1-1, Higashi 1-Chome, Tsukuba-shi, Ibaraki-ken, Japan (Post office code: 305-8566) [formerly the National Institute of Bioscience and Human-Technology, Agency of Industrial Science and Technology (1-3, Higashi 1 chomeTsukuba-shi Ibaraki-ken, Japan (Postoffice code: 305))]} as *Pseudomonas fluorescens* FPT-9601 (Accession Number FERM BP-5478) (deposition date: March 21, 1996) and *Pseudomonas* sp. FPH-9601 (Accession Number FERM BP-5479) (deposition date: March 21, 1996) and those which have been deposited at the International Patent Organism Depositary, National Institute of Advanced Industrial Science and Technology [AIST Tsukuba Central 6, 1-1, Higashi 1-Chome, Tsukuba-shi, Ibaraki-ken, Japan (Post office code: 305-8566)] as TSB-25 (Accession Number FERM BP-8193) (deposition date: January 18, 2000), FPT-Y1 (Accession Number FERM BP-8191) (deposition date: January 18, 2000), FPT-B1 (Accession Number PERM BP-8190) (deposition date: January 18, 2000) and XM-D (Accession Number FERM BP-8192) (deposition date: January 18, 2000) and they are bacteria of genus *Pseudononas* and bacteria of genus *Xanthomonas* separated from roots of farm products and have a symbiotic ability in living plants. However, the bacteria are oligotrophic as compared with those of the same genus and species living in soil and rhizosphere. Accordingly, they are able to live (hereinafter, referred to as "colonize") at the bacterial concentration of about 10³ to 10⁵ CFU/ml in cell gap of cortex in the stem or in cell gap of the cortex in hypocotyl.

The cutting seedling according to the present invention is able to be prepared in such a manner that a plant which will be subjected to the cuttage is collected and, during its cuttage into a cuttage bed, the strain of the present invention is inoculated or that the collected plant is subjected to cuttage into a solid (grafting bed) to which the strain of the present invention is previously inoculated. The cutting seedling to which the strain of the present invention is inoculated suppresses the invasion of polluting microorganisms from the surface exposed after cutting of the collected plant. Thus, as a result of suppression of invasion of polluting microorganisms, it is now possible to prevent the softening of tissues of rooting part of the cutting seedling, to prevent poor rooting and to enhance the raising rate of seedling for planting. In addition, as a result of promoting action of rooting by colonization of the strain of the present invention in stem and hypocotyl, rooting at the surface exposed after cutting and the upper tissue thereof is promoted whereupon a cutting seedling having shoot-borne roots formed in wide range is able to be prepared.

In order to inoculate the strain to be used of the present invention to the cutting seedling, an enrichment culture of the stain is carried out. In the enrichment culture, there is no limitation for a medium so far as it is a common medium used for incubation of microorganism (such as a bouillon medium and a potato-dextrose medium) or others similar thereto although it is important that incubation is carried out together with keeping the oligotrophic property of the strain to be used. When incubation is carried out under an oligotrophic condition, there is a significant increase in colonization rate of the strain of the present invention in the stem and the hypocotyl after inoculation of the strain of the present invention. With regard to the oligotrophic medium, an example thereof is that the above-mentioned culture medium is diluted so as to make the microorganism density after the incubation 10⁷ to 10⁸ CFU/ml and is used as a culture medium. The incubated cells of each strain subjected to an enrichment culture using the oligotrophic medium as such is able to be made into various inoculation forms (solution, solid, etc.) depending upon the cutting method of the plant to be used.

When spikes collected from carnation or lateral buds of tomato are taken as an example in a method for the manufacture of the cutting seedling according to the present invention, a method where they are inoculated by dipping in a suspension of microorganism cells is suitable for the work. With regard to the cell concentration at that time, although there is no problem for use when it is within a range of 10² to 10⁸ CFU/ml, it is preferred to be 10⁵ CFU/ml or more. When it is less than 10² CFU/ml, the effect becomes unstable by the influence of the microorganism in the environment while, when it is more than 10⁸ CFU/ml, there is no improvement in the effect and that is not also preferred in view of economy. When the surface exposed after cutting is dipped in a solution of the microorganism cells of the present invention immediately after collection of the plant, inoculation of the microorganism cells can be conducted easily. With regard to the time for dipping, about 10 to 60 minutes will be sufficient enough.

When a plant is subjected to a solution culture using a solution containing the microorganism cells of the present invention, a cutting seedling is obtained by cultivation as it is although the growing time becomes long in the case of a solution culture. In the case of seedling by cuttage grafting after cutting the root of plants of family *Cucurbitaceae* which has been a mainstream in recent years, each of stock and graft is grown, the stock is cut at the upper part of cotyledon and the lower part of hypocotyl, then the graft where the hypocotyl is cut at the lower part of cotyledon is subjected to a cuttage grafting and is inserted into a solid containing the microorganism cells whereupon an inoculation work is conducted and growing is carried out as it is.

With regard to a solid as such, there is no particular limitation so far as it is in a shape suitable for cuttage such as soil for cultivation or rock wool mat although it is preferred that the soil for cultivation is used after being sterilized by means of burning or the like. The above-mentioned culture liquid of the strain of the present invention is contained therein by adding it thereto and, with regard to the cell concentration at that time, there is no problem for inoculation provided that it is within a range of 10⁴ to 10⁷ CFU/g. When it is less than 10⁴ CFU/g, the effect is generally unstable being affected by the microorganisms in the solid while, when it is more than 10⁷ CFU/g, there is no particular improvement in the effect and that is not also preferred in view of economy. Particularly preferred cell concentration is 10⁵ CFU/g or more.

It is also possible to cultivate by inserting the collected spikes of carnation and the lateral buds of tomato mentioned already into this solid.

Incidentally, in the case of the solid of the present invention, when the strain of the present invention is inoculated utilizing it so as to transplant cutting seedling; it is preferred to carry out the cuttage and growth of seedling in the solid of the present invention at least for 10 days or, more preferably, at least for 20 days although that depends upon type of the plant to be used, utilizing site of the cuttage, type of the strain, type of the solid, temperature of the environment, method for cultivation of the cuttage after inoculation, etc. With regard to the upper limit of the cultivation of seedlings, 50 days will be sufficient. For example, in the case of a cell molded seedling cultivation, it is generally necessary that a root pot is well formed. As mentioned already, it is also possible to cultivate a cutting seedling in the solid of the present invention continuously as it is without transplantation of the cutting seedling.

In the cultivation of the cutting seedling in accordance with the present invention, the strain of the present, invention may be used solely or a plurality of strains may be used jointly. When the strains are used jointly, it is preferred in view of reproducibility and stability of the strain inoculation that a soil containing the strain of the present invention is prepared for each of desired strains and that it is adjusted to nearly the same concentration followedby using after mixing them. With regard to the cuttage which is an object of the present invention, there is no particular limitation although particularly good result is able to be achieved when used for plants of family *Solanaceae* such as tomato, green pepper and eggplant and those of family *Cucurbitaceae* such as cucumber and watermelon.

The cutting seedling according to the present invention to which the strain is inoculated shows a low generating rate for softening seedlings during cultivation and in root part of the cutting seedling, shoot-borne roots are formed in wide range. In addition, as compared with the ordinary cultivation of seedlings of tomato, there is noted of an effect of reducing the generation of damping-off of the seedlings.

### Examples

As hereunder, an illustration will be made by means of Examples of the present invention although the present invention is not limited thereto.

### <Example 1> (Preparation of a microorganism cell suspension and of a substance containing the microorganism cells)

The strains as mentioned in Table 1 were incubated in a 5-fold diluted potato-dextrose-agar medium at 25°C for two weeks and then made into cell suspensions and cell-containing solids having the given concentrations as shown in Table 1. Sterile water, 0.1% sodium alginate solution and 0.1% calcium chloride solution were used for the preparation of the suspension. For the preparation of the solid, the microorganism cells to be used were suspended in sterile water and added to a solid within a range of 10 v/v% to 30 v/v% so as to give the concentrations as shown in Table 1. With regard to the solid, there were used soil containing not more than 10 mg fertilizer component (N content) per 100 g soil, seedling-cultivating sand, vermiculite, silicic acid powder, etc. after subjecting to a dry heat sterilization.

**Table 1**

| Material No. | Microorganism Used | Form | Cell Concentration (CFU/ml for solution) (CFU/g for solid) |
|---|---|---|---|
| (1)-1 | FPT-9601 | Aqueous suspension | 10⁷ |
| (1)-2 | | Suspension of alginic acid solution | 10² |
| (1)-3 | | Suspension of calcium solution | 10⁴ |
| (1)-4 | | Solid | (a) 10⁵, (b) 10⁷ |
| (2)-1 | FPH-9601 | Aqueous suspension | 10⁷ |
| (2)-2 | | Suspension of alginic acid solution | (a) 10², (b) 10⁴ |
| (2)-3 | | Solid | (a) 10⁵, (b) 10⁷ |
| (3)-1 | TSB-25 | Aqueous suspension | 10⁷ |
| (3)-2 | | Suspension of alginic acid solution | (a) 10², (b) 10⁴ |
| (3)-3 | | Solid | (a) 10⁵, (b) 10⁷ |
| (4)-1 | FPT-Y1 | Suspension of alginic acid solution | (a) 10³, (b) 10⁸ |
| (4)-2 | | Solid | 10⁶ |
| (5)-1 | FPT-B1 | Suspension of alginic acid solution | (a) 10³, (b) 10⁸ |
| (5)-2 | | Solid | 10⁶ |
| (6)-1 | XM-D | Suspension of alginic acid solution | (a) 10³, (b) 10⁸ |
| (6)-2 | | Solid | 10⁶ |

### <Example 2> (Cutting seedling by lateral buds of tomato)

Lateral buds in the harvest period of tomato (variety: Momotaro York) in a facility cultivation of farmers in Ibokawa-cho, Ibo-gun, Hyogo Prefecture were collected in late June of 2001 and then their surfaces exposed upon cutting were immediately dipped in the aqueous suspensions and suspensions of sodium alginate acid solution mentioned in Table 1 ((1)-1, (2)-1, (3)-1, (4) -1 (a), (5)-1 (a) and 6-1 (a)). As controls, they were dipped in sterile water and in 0.1% aqueous solution of sodium alginate in the same manner. After dipping for 30 minutes, they were subjected to a cuttage into a 50-cell plug tray charged with a commercially available cell-molded soil for cultivation of seedlings and subjected to cuttage cultivation. After cultivation of the seedlings in an agricultural greenhouse for 4 weeks at an average cultivation temperature of 28°C, raising rate of seedling for planting was checked. Seedlings where no root pot was formed, seedlings where exposed surfaces after cutting and axial parts were softened and withered seedlings were defined as condemned seedlings. Fifty seedlings were used' for each section. The result is shown in Table 2.

**Table 2**

| | Section of the Invention | Control Section |
|---|---|---|
| Material No. | Raising Rate of Seedling for Planting (%) | Raising Rate of Seedling for Planting (%) |
| (1)-1 | 96 | 73 |
| (2)-1 | 90 | |
| (3)-1 | 92 | |
| (4)-1 (a) | 94 | 75 |
| (5)-1 (a) | 98 | |
| (6)-1 (a) | 88 | |

### <Example 3> (Cuttage of seedlings of green pepper, eggplant and cucumber wherefrom hypocotyl was cut off)

Green pepper (variety: Kyonami), eggplant (variety: Senryo No. 1) and cucumber (variety: Nankyoku No. 2) were sowed in a sowing box charged with commercially available soil for cultivating the seedlings, lower parts (boundary between root and hypocotyl) was cut after development of true leaves and immediately subjected to a cuttage into a 72-cell plug tray charged with a commercially available cell-molded soil for cultivation of seedlings. In the test sections, the solid of Table 1 ((1)-4 (b) , (2)-3 (b), (3)-3 (b) , (4)-2, (5)-2 and (6)-2) was previously charged in about 4 to 5 ml in a column shape at the center of each cell and the cuttage was conducted at that part. As a control, to a dry heat sterilized solid was added sterile water in the same amount, the material was charged at the center of the cell in the same manner and subjected to a cuttage. As a solid, there was used a material where silicic acid powder and vermiculite were mixed in a ratio of 1:2 by volume. Cultivation of seedlings was conducted for five weeks at an average cultivation temperature of 26°C and then raising rate of seedling for planting was checked by the same manner as in Example 2. Thirty seedlings were used for each section. The result is shown in Table 3.

**Table 3**

| Test Section | | Section of the Invention | Control Section |
|---|---|---|---|
| Vegetable | Material No. | Raising Rate of Seedling for Planting (%) | Raising Rate of Seedling for Planting (%) |
| Green pepper | (1)-4 (b) | 93 | 70 |
| | (2)-3 (b) | 83 | |
| | (3)-3 (b) | 93 | |
| | (4)-2 | 90 | |
| | (5)-2 | 90 | |
| | (6)-2 | 80 | |
| Eggplant | (1)-4 (b) | 100 | 79 |
| | (2)-3 (b) | 90 | |
| | (3)-3 (b) | 93 | |
| | (4)-2 | 93 | |
| | (5)-2 | 93 | |
| | (6)-2 | 83 | |
| Cucumber | (1)-4 (b) | 90 | 65 |
| | (2)-3 (b) | 73 | |
| | (3)-3 (b) | 93 | |
| | (4)-2 | 93 | |
| | (5)-2 | 90 | |
| | (6)-2 | 80 | |

### <Example 4> (Cultivation of seedlings by cuttage in a solution of lateral bud seedling of tomato)

Under the condition where an average temperature was 29°C, lateral buds of tomato during a solution culture were collected and their surfaces exposed after cutting were dipped in an aqueous solution (depth of about 3 cm) where 5% of (1)-4 (a) and (2)-3. (a) or (2)-3 (a) and (3)-3 (a) were added (with regard to the solid, a material where *akadamatsuchi* (a kind of soil) and vermiculite were mixed in 2:1 by volume was used) so that root was generated. As a control, a material in which sterile water was added to dry-heated sterilized vermiculite in the same amount was similarly added so that root was generated. Raising rate of seedling for planting and rate of formation of shoot-borne roots in wide range after two weeks from the dipping were checked. In this test, seedlings where exposed surface after cutting and stem part were softened were appropriately discarded. One hundred seedlings were used for each section. The result is shown in Table 4.

**Table 4**

| Test Sections | Section of the Present Invention | | Control Section | |
|---|---|---|---|---|
| | Raising Rate of Seedling for Planting (%) | Rate of Formation of Shoot-Borne Roots in Wide Range (%) | Raising Rate of Seedling for Planting (%) | Rate of Formation of Shoot-Borne Roots in Wide Range (%) |
| (1)-4 (a), (2)-3 (a) | 96 | 88 | 62 | 9 |
| (2)-3 (a), (3)-3 (a) | 94 | 83 | | |

### <Example 5> (Cuttage grafting after cutting the root of watermelon)

Under the condition of an average temperature of 27°C, *Lagenaria siceraria* var. *hispida* (variety: Kachidoki No. 2) was sowed and, two days after that, watermelon (variety: Shimawo MK) was sowed and, after each ten days from the sowing, *L*. *siceraria* var. *hispida* was cut at the lower part of hypocotyl (boundary between root and hypocotyl) and the upper part of cotyledon (to be used as a stock) and watermelon which was cut at the lower part of cotyledon was subjected to a cuttage grafting thereto. The grafted seedling was subjected to a cuttage into a 50-cell plug tray charged with the same soil as in Example 3. Each of the cell trays (volume: about 80 ml) was charged with a conventional soil for cultivation of seedlings for both test section and control section and, in the test section, 20 ml of (1)-3 were irrigated per cell and then each 20 ml of (2)-2 (b) and (3)-2 (b) were irrigated separately. The control section was irrigated with water and 0.1% aqueous solution of sodium alginate in the same amounts and in the same manner. Seedlings were cultivated for three weeks, seedlings with poor rooting at the grafted area were discarded and the raising rate of seedling for planting was checked. Twenty seedlings were used for each section. The result is shown in Table 5.

**Table 5**

| Test Sections | Section of the Invention | Control Section |
|---|---|---|
| | Raising Rate of Seedling for Planting (%) | Raising Rate of Seedling for Planting (%) |
| (1)-3, (2)-2 (b) | 90 | 73 |
| (1)-3, (3)-2 (b) | 85 | |

### <Example 6> (Cuttage at a high-temperature season of tomato wherefrom hypocotyl was cut off)

Under the condition. of highest temperature of 43°C and lowest temperature of 28°C in a greenhouse, tomato (variety: Momotaro York) was sowed in a conventional soil for cultivation, the lower part of hypocotyl (boundary between root and hypocotyl) was cut off with two true leaves. and subjected to a cuttage into a 50-cell plug tray charged with a conventional soil for cultivation for both cases of test section and control section. Before the cuttage, the test section was irrigated with each 20 ml of (1)-2, (2)-2 (a), (3)-2 (a), (4)-1 (b), (5)-1 (b) and (6)-1 (b) while the control section was irrigated with a sodium alginate solution in the same amount and in the same manner. After the cuttage, cultivation of the seedlings was carried out for two to three weeks. Raising rate of seedling for planting and rate of formation of shoot-borne roots in wide range after cultivation of seedlings were checked. One thousand and five hundred seedlings were used for each section. Rate of formation of shoot-borne roots in wide range was checked by means of a random sampling of 20 seedlings from each section. The result is shown in Table 6.

**Table 6**

| Test Sections | Section of the Present Invention | | Control Section | |
|---|---|---|---|---|
| | Raising Rate of Seedling for Planting (%) | Rate of Formation of Shoot-Borne Roots in Wide Range (%) | Raising Rate of Seedling for Planting (%) | Rate of Formation of Shoot-Borne Roots in Wide Range (%) |
| (1)-2 | 99 | 95 | 86 | 4 |
| (2)-2 (a) | 97 | 65 | | |
| (3)-2 (a) | 99 | 85 | | |
| (4)-1 (b) | 98 | 70 | | |
| (5)-1 (b) | 97 | 80 | | |
| (6)-1 (b) | 96 | 65 | | |

## Claims

1. A cutting seedling where a strain selected from *Pseudomonas fluorescens* FPT-9601 strain (Accession Number FERM BP-5478), FPH-9601 strain (Accession Number PERM BP-5479), TSB-25 strain (Accession Number FERM BP-8193), FPT-Y1 strain (Accession Number FERM BP-8191), FPT-B1 strain (Accession Number FERM BP-8190) and *Xanthomonas maltophyllia* XM-D strain (Accession Number PERM BP-8192) is inoculated.

2. Amethod for inoculation of a strain to a cutting seedling, . **characterized in that**, a strain is inoculated to a cutting seedling using a solution or a solid containing at least one member of the strain as disclosed in claim 1.

3. Amethod for inoculation of a strain to a cutting seedling according to claim 2, **characterized in that**, a concentration of the strain as disclosed in claim 2 is 10² to 10⁸ CFU/ml for the solution or 10⁴ to 10⁷ CFU/g for the solid.

4. Amethod for inoculation of a strain to a cutting seedling according to claim 3, **characterized in that**, the cuttage is dipped in the solution as disclosed in claim 3 for about 10 to 60 minutes.

5. Amethod for inoculation of a strain to a cutting seedling according to claim 3, **characterized in that**, the cutting seedling is grown for 10 to 50 days in the solid as disclosed in claim 3.

6. A cutting seedling or a method for inoculation of a strain to a cutting seedling according to any one of claims 1-5, **characterized in that**, the cutting seedling is one member selected from family *Solanaceae* or family *Cucurbitaceae.*
